# EUROPÄISCHE PATENTSCHRIFT

(11) **EP 2 573 989 B1**
(45) Veröffentlichungstag und Bekanntmachung des Hinweises auf die Patenterteilung: **08.08.2018**
(21) Anmeldenummer: 12006419.1
(22) Anmeldetag: 12.09.2012
(51) Int. Cl.: H04L 27/00

(54) **Vorrichtung zur Unterdrückung störender hochfrequenter Signale**
Device for suppressing unwanted high frequency signals
Dispositif de suppression de signaux parasites haute fréquence

(30) Priorität: 12.09.2011 ES 201101006; 12.09.2011 ES 201100854
(43) Veröffentlichungstag der Anmeldung: 27.03.2013
(73) Patentinhaber: Televés, S.A., 15706 Santiago de Compostela (ES)
(72) Erfinder: Rodal Perez, Justo, E-15706 Santiago de Compostela (ES); Fernandez Carnero, José Luis, E-15706 Santiago de Compostela (ES)
(74) Vertreter: Dosterschill, Peter

(56) Entgegenhaltungen:
- WO-A1-2005/011149
- US-A- 3 882 266
- "The impact of LTE on communal aerial systems, report issue 1", ETSI DRAFT; THE IMPACT OF LTE ON COMMUNAL AERIAL SYSTEMS, REPORT ISSUE 1, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. Etsi_Cenelec, 18. Juni 2011 (2011-06-18), Seiten 1-45, XP014092313, [gefunden am 2011-06-18]
- Soontai: "LTE Filter", , 26. Mai 2011 (2011-05-26), Seiten 1-1, XP002769704, Gefunden im Internet: URL:http://web.archive.org/web/20110526192 327/http://www.soontai.com/LTE-filter.html [gefunden am 2017-04-28]

## Beschreibung

Die vorliegende Erfindung betrifft eine Vorrichtung zur Unterdrückung störender hochfrequenter Signale nach dem Oberbegriff des Anspruchs 1.

Insbesondere ist die erfindungsgemäße Vorrichtung eine Vorrichtung zur Eliminierung bzw. Unterdrückung von Signalen, die sonst störend auf Radio- und/oder Fernsehsignale in einem MATV/SMATV-System wirken.

Es sind bereits MATV/SMATV-Systeme bekannt, das sind Gemeinschaftssysteme für den Empfang, die Bearbeitung und die Verteilung von Signalen des terrestrischen Fernsehens und des Satellitenfernsehens. Diese Systeme enthalten gemeinschaftliche Komponenten, die den Transport des Fernsehsignals bis zu den Benutzerendgeräten in einer Benutzergemeinschaftsanlage ermöglichen. Diese MATV/SMATV-Systeme weisen im Wesentlichen eine Signalaufnahmeeinheit auf, die unterschiedliche Kanäle des terrestrischen Fernsehens oder des Satellitenfernsehens empfängt, eine Kopfeinheit, die die empfangenen Kanäle bearbeitet, anpasst und verstärkt, sowie ein Verteilungsnetz (MATV/SMATV-Netz), das die Signale bis zu den Benutzerendgeräten transportiert.

Obwohl diese System ursprünglich ausschließlich für Fernsehsignale ausgelegt waren, werden zur Zeit Systeme entwickelt, die auch für andere Typen von Telekommunikationssignalen (Daten, Internet, interaktive Dienste, etc.) ausgelegt sind.

Die existierenden MATV/SMATV-Systeme können in Abhängigkeit verschiedener Faktoren verschiedene Verstärkervorrichtungen benutzen, wobei diese im allgemeinen in drei Gruppen aufgeteilt sind, Verstärkervorrichtungen für Schmalbandanwendungen, Verstärkervorrichtungen für Breitbandanwendungen, Verstärkervorrichtungen für variable und/oder programmierbare Bänder. Gleichzeitig können diese Verstärkervorrichtungen gemeinsam im selben MATV/SMATV-System in Abhängigkeit verschiedener Faktoren wie Pegel des empfangenen Signals, existierendes Sprektrum der Frequenzen, gewünschter Ausgangspgel, Größe der Installation, usw. genutzt werden.

Die existierenden MATV/SMATV-Systeme sind dafür ausgelegt, Radio- und/oder Fernsehsignale, die von Emfpangsantennen aufgenommen werden, zu empfangen und zu verteilen. Die Ausgangsspannung und/oder der Gewinn der Verstärker und/oder das Frequenzband sind der Anzahl der Signale, dem Frequenzspekturm der Signale und dem Pegel der von den Antennen aufgenommenen Signal angepaßt, mit dem hauptsächlichen Ziel, die Einfügungsverluste des Netzes zu kompensieren und dem Endbenutzer ein Signal zur Verfügung zu stellen, das eine gewisse Schwelle überschreitet und das frei von Fehlern (Störungen) ist.

Die GSM-Signale, die sich nahe dem UHF-Band befinden, in dem sich die Fernsehsignale befinden, verursachen schwerwiegende Störungsprobleme, wenn die GSM-Signale über die Antenne und die Verstärkerelemente eingeführt werden und beim Empfangsgerät eintreffen. Neben diesem Effekt wird zweifelsohne die Benutzung des Frequenzbandes von 790 bis 862 MHz (die Kanäle 61 bis 69 des Fernsehbandes) für Dienste des mobilen Internets und Systeme des drahtlosen Zugangs zum Breitband zu einem Auftreten einer Mehrzahl von Störungen in den Fernsehkanälen (terrestrisches Digitalfernsehen - TDT) führen, die diesem Frequenzband benachbart sind und wahrscheinlich auch in nicht benachbarten Kanälen, in Abhängigkeit des Pegels des gewünschten Signals und des Pegels des störenden Signals und der benutzten Verstärkervorrichtung oder der benutzten Verstärkervorrichtungen.

Die sogenannten Long Term Evolution-Signale (im folgenden: LTE-Signale) werden der Schlüssel für den Start des mobilen Internets sein und nehmen die hohen Kanäle des UHF-Bandes (Kanäle 61 bis 69) ein, in Anbetracht der Aufteilung des UHF-Freuenzbandes für Fernsehen und Daten des sogenannten Internets der 4. Generation, wobei Probleme dadurch entstehen, das Störungen in den benachbarten Fernsehkanäle (zum Beispiel Kanal 60) auftreten.

Aus Soontai: LTE Filter", 26.05.2011, Seiten 1-1, XP002769704, Gefunden im Internet:URL:http://web.arch.org/web/20110526192327/http://www.sontai. com/LTE-filter.html [gefunden am 2017-04-28] ist ein Tiefpassfilter hoher Güte bekannt, welches zur Unterdrückung von Interferenzen durch ein LTE Signal auf digitale, terrestrische Fernsehsignale im darunterliegenden Spektrum bis 790 MHz herangezogen wird.

Aus "The impact of LTE on communal aerial systems, report issue 1" ETSI Draft; European Telecommunications Standards Institute, 18.06.2011, Seiten 1-45, XP014092313, [gefunden am 2011-06-18] ist die Unterdrückung störender hochfrequenter Signale bekannt, die in Fernsehkanälen enthalten sind.

Aus US 3 882 266 A ist eine Schaltungsanordnung zur Umwandlung ausgewählter Kanäle bekannt. Die bekannte Schaltungsanordnung weist ein Eingangsbandpassfilter auf, einen ersten Mixer, der mit dem Eingangsbandpassfilter verbunden ist, und einen ersten Oszillator, der mit dem ersten Mixer verbunden ist, und weiterhin ein Zwischenbandpassfilter, das mit dem Ausgang des ersten Mixers verbunden ist, wobei das Zwischenbandpassfilter im Wesentlichen dieselbe Bandbreite wie das erste Filter hat. Weiterhin weist die bekannte Schaltungsanordnung einen zweiten Mischer und einen zweiten Oszillator auf, der mit dem zweiten Mischer verbunden ist. Ein Ausgangsbandpassfilter ist mit dem zweiten Mischer verbunden und hat eine mit dem Eingangs- und dazwischenliegenden Filter die gleiche Bandbreite. Einer der Oszillatoren hat eine solche Frequenz, dass weniger als alle der mehreren am Ausgang des ersten Mischers zur Verfügung stehenden Fernsehkanäle von dem dazwischenliegenden Bandpassfilter hindurch gelassen werden. Die bekannte Schaltungsanordnung ist damit komplex strukturiert.

Ausgehend von diesem Stand der Technik liegt der vorliegenden Erfindung die Aufgabe zugrunde, eine Vorrichtung zur Unterdrückung störender hochfrequenter Signale der eingangs genannten Art zu schaffen, die eine geringere Komplexität aufweist.

Diese Aufgabe wird durch eine Vorrichtung gelöst, die in den Patentansprüchen definiert ist.

Die erfindungsgemäße Vorrichtung ist eine Vorrichtung zur Eliminierung von Signalen (Störungen), die sonst auf Radio- und/oder Fernsehsignale wirken würden.

Ein vorteilhafte Ausführungsform der erfindungsgemäßen Vorrichtung zur Unterdrückung störender hochfrequenter Signale ist dadurch gekennzeichnet, dass die Vorrichtung Mittel aufweist, die aus einem am Eingang anliegenden Signal, das Fernsehkanäle umfasst, störende hochfrequente Signale eliminiert, deren Frequenz oberhalb eines vorbestimmten Fernsehkanals liegt. Insbesondere bestehen diese Mittel aus einem Eingangsdiplexer, einem Ausgangsdiplexer, zwei Frequenzwandlern und aus einem SAW-Filter. Der erste und der zweite Frequenzwandler und das SAW-Filter sind parallel zu einer Verbindung zwischen Eingangsdiplexer und Ausgangsdiplexer geschaltet, wobei der erste Frequenzwandler, das SAW-Filter und der zweite Frequenzwandler in Reihe geschaltet sind.

Damit wird der Vorteil erzielt, eine Vorrichtung mit einer vergleichsweise geringen Komplexität zur Verfügung gestellt wird, die sich durch eine entsprechend geringere Fehleranfälligkeit auszeichnet.
Bei einer weiteren vorteilhaften Ausführungsform der erfindungsgemäßen Vorrichtung wird der Kanal, von dem an die störenden Signale eliminiert werden, mittels eines Schalters ausgewählt.
Damit wird der Vorteil erzielt, dass in der eigentlichen Installation der Schnittkanal (Frequenzbereich oberhalb eines vorbestimmten Fernsehkanals) des MATV/ SMATV-Netzes in Abhängigkeit der Pegel der störenden Signale bestimmt werden kann.
Bei einer weiteren vorteilhaften Ausführungsform der Erfindung ist der Schalter mittels eines Fernbedienungsgebers bedienbar, der Schalter wird dabei also mittels Fernbedienung aktiviert bzw. deaktiviert.

Damit wird der Vorteil erzielt, dass der Schnittkanal in einer außerordentlich einfachen Weise ausgewählt werden kann.
Bei einer weiteren vorteilhaften Ausführungsform der Erfindung ist die Vorrichtung mit einer internen oder externen Speisequelle verbunden. Damit wird der Vorteil erzielt, dass die Benutzung der Vorrichtung diversifiziert wird und die Installation erleichtert wird.

Bei einer weiteren vorteilhaften Ausführungsform der Erfindung ist die externe Speisequelle über einen Ausgangsstecker mit der Vorrichtung verbunden.

Damit wird der Vorteil erzielt, dass die Speisung der erfindungsgemäßen Vorrichtung mit Vorrichtungen eines anderen Typs erfolgen kann.

Im Folgenden wird eine Ausführungsform der erfindungsgemäßen Vorrichtung zur Unterdrückung störender hochfrequenter Signale beispielhaft, also nicht abschließend anhand der Zeichnung beschrieben.

Es zeigt
- Figur 1: die Elemente der erfindungsgemäßen Vorrichtung zur Unterdrückung störender hochfrequenter Signale;
- Figur 2: der Begrenzungsbereich des Eingangsfilters der erfindungsgemäßen Vorrichtung,
- Figur 3: der Begrenzungsbereich des Eingangsdiplexers der erfindungsgemäßen Vorrichtung;
- Figur 4: das Signal am Ausgang des Ausgangsdiplexers der erfindungsgemäßen Vorrichtung.

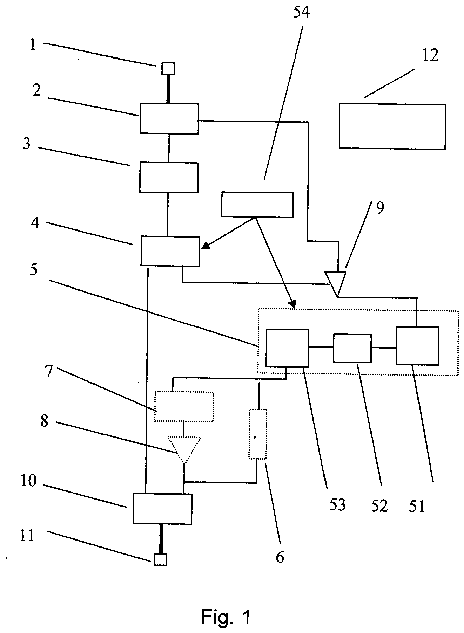

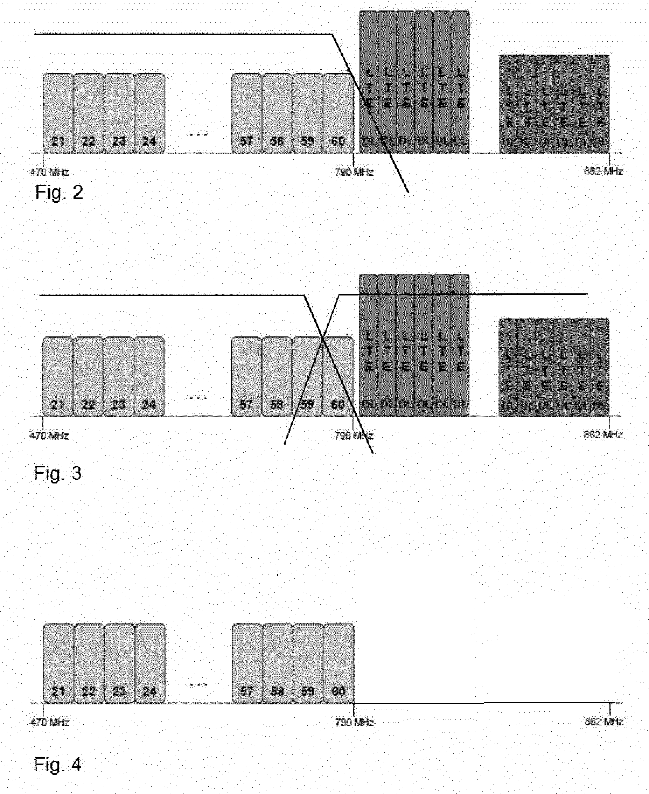

Wie in Figur 1 dargestellt, werden in der erfindungsgemäßen Vorrichtung die Eingangssignale, die von einem Signalaufnahmeelement (Telekommunikationsantenne, Kabel oder ähnliches) stammen, in die Vorrichtung über einen Eingangsverbinder 1 eingeführt. Die am Eingang der Vorrichtung anliegenden Signale sind beispielsweise sowohl Signale des Analogfernsehens oder des Digitalfernsehens als auch LTE-Datensignale. Die letztgenannten Signale nehmen die hohen Kanäle des UHF-Bandes (Figuren 2 und 3: Kanäle LTE DL, LTE UL; 61 bis 69) ein, im Hinblick auf die Aufteilung bzw. der Struktur des UHF-Frequenzbandes für Fernsehen und Daten des sogenannten Internets der 4. Generation.

Die Eingangssignale in ihrer Gesamtheit werden in einem Eingangsdämpfungsglied 2 gedämpft, mit dem Ziel, ihren Pegel auf die folgenden Schaltungsblöcke der erfindungsgemäßen Vorrichtung anzupassen.

Diese Dämpfung kann in manueller Form oder auch in automatischer Form erfolgen. Für die automatische Dämpfung ist vorgesehen, dass die Vorrichtung einen Verstärker mit automatischer Gewinnsteuerung 9 aufweist.

Am Ausgang des Eingangsdämpfungsgliedes 2 eliminiert ein Eingangsfilter 3 einen Teil des LTE-Signals (siehe Figur 2). Diese Eliminierung ist nicht vollständig, im Hinblick auf den geringen Frequenzrahmen bzw. den kleinen Abstand, der zwischen dem Fernsehkanal 60 und dem folgenden ersten LTE-Kanal (nur 1 MHz-Schutzband) besteht, und im Hinblick auf die erhöhte Dämpfung, die benötigt wird, um das LTE-Signal vollständig zu eliminieren. Diese vollständige Eliminierung erzielt man mit der Benutzung von Oberflächenfiltern (SAW-Filter).
Daher wird das Fernsehsignal am Ausgang des Eingangsfilters 3 mittels eines Eingangsdiplexers 4 getrennt, der das Signal in zwei Signale aufteilt, wobei ein Signal aus den Fernsehkanälen 21 bis 59 besteht und wobei das andere Signal aus dem Fernsehkanal 60 besteht und aus höheren Frequenzen, wo sich die störenden LTE-Signale befinden (siehe Figur 3).

Der Teil des Signals, das aus den Fernsehkanälen 21 bis 59 besteht, wird in einen Ausgangsdiplexer 10 eingeführt.

Der Teil des Signals, der aus dem Kanal 60 und den darüber angeordneten Frequenzen besteht, wo sich die störenden LTE-Signale befinden, wird über einen Verstärker mit automatischer Gewinnsteuerung 9 in einen Frequenzverschiebungsblock 5 eingeführt, der aus einem ersten Frequenzumwandler 51 besteht, wo das Signal entsprechend Kanal 60 mittels einer ersten Frequenzumwandlung auf eine Zwischenfrequenz von zum Beispiel 36 MHz umgewandelt wird. Anschließend wird es mittels eines SAW-Filters 52 gefiltert, wodurch eine Unterdrückung/Zurückweisung um 40 dB in 1 MHz Bandbreite erzielt wird.
So werden die Frequenzen bzw. Fernsehkanäle eliminiert, in denen sich die störenden LTE-Signale befinden. Schließlich wird das aus der SAW-Filtrierung gebildete Signal mittels einer zweiten Frequenzumwandlung in einem zweiten Frequenzumwandler 53 umgewandelt, wiederum zum Kanal 60. Wie aus Figur 1 ersichtlich, sind der erste und der zweite Frequenzumwandler 51, 53 und das SAW-Filter 52 parallel zu einer Verbindungsleitung zwischen Eingangsdiplexer 4 und Ausgangsdiplexer 10 geschaltet; der erste Frequenzwandler 51, das SAW-Filter 52 und der zweite Frequenzwandler 53 sind in Reihe geschaltet. Die störenden hochfrequenten Signale LTE liegen im Bereich zwischen etwa 790 MHz und 862 MHz; hierauf ist die Erfindung jedoch nicht eingeschränkt.

So erhält man am Ausgang des Frequenzverschiebungsblocks 5 ein Fernsehsignal, das ausschließlich aus dem Kanal 60 besteht, ohne die störenden LTE-Signale. Dieses so gebildete Ausgangssignal des Frequenzverschiebungsblocks 5 wird in den Ausgangsdiplexor 10 eingeführt, wo es mit dem Teil des Signals gemischt wird, das aus den Fernsehkanälen 21 bis 59 besteht und schon am Eingang der Vorrichtung keine Störungen enthält. In den Ausgangsdiplexor 10 wird also ein gefiltertes, von (LTE-)Störungen befreites Signal sowie ein schon ursprünglich störungsfreies Signal eingeführt.

So erhält man am Ausgang der Vorrichtung, im Ausgangsverbinder 11, dasselbe Eingangssignal, das aus den Fernsehkanälen 21 bis 60 besteht, und so eliminiert man die Störungen, die den über Kanal 60 angeordneten Frequenzen, im vorliegenden Fall den LTE-Störungen, entsprechen (siehe Figur 4). Das Signal des Frequenzverschiebungsblocks 5 wird in den Ausgangsdiplexer 10 eingeführt, entweder direkt über eine Durchgangsleitung 6 oder über ein Filter 7 und einen Verstärker 8 in dem Fall, in dem es notwendig ist, die Pegel der Signale an beiden Eingängen des Ausgangsdiplexers 10 anzugleichen.

Die erfindungsgemäße Vorrichtung weist einen - vorzugsweise fernbedienbaren - Schalter 54 auf, der auf den Eingangsdiplexer 4 und auf den Frequenzverschiebungsblock 5, dort auf den ersten und den zweiten Frequenzwandler 51, 53 in der Weise wirkt, dass der Fernsehkanal (Schnittkanal), von dem an die höheren Frequenzen eliminiert werden, in denen sich die LTE-Signale befinden, ausgewählt wird. In dem hier beschriebenen Beispielsfall ist dies der Kanal 60. Der Schalter 54 ist vorzugsweise ein Fernbedienungsgeber.

Die Mittel der erfindungsgemäßen Vorrichtung, die aus einem am Eingang anliegenden Signal 21, ..., 60; LTE, das Fernsehkanäle 21, ..., 60 umfasst, störende hochfrequente Signale LTE eliminieren, deren Frequenz oberhalb eines vorbestimmten Fernsehkanals (z.B. 60) liegt, sind insbesondere in der Weise ausgestaltet, dass eine vorgebbare Anzahl n von Fernsehkanälen eliminiert werden. Die Vorrichtung weist dieselbe Anzahl n von Frequenzverschiebungsblöcken 5 mit jeweils einem ersten und einem zweiten Frequenzumwandler 51, 53 sowie je einem SAW-Filter 52 auf.

Wird beispielsweise nur ein Fernsehkanal, z.B. der Fernsehkanal 60, eliminiert, so enthält die erfindungsgemäße Vorrichtung lediglich einen Frequenzverschiebungsblocks 5 auf.
Werden dagegen zwei Fernsehkanäle, z.B. die Fernsehkanäle 59 und 60, eliminiert, so enthält die erfindungsgemäße Vorrichtung genau zwei Frequenzverschiebungsblöcke 5, die parallel zueinander geschaltet sind. Werden drei Fernsehkanäle, z.B. die Fernsehkanäle 58, 59 und 60, eliminiert, so enthält die erfindungsgemäße Vorrichtung drei Frequenzverschiebungsblöcke 5, die parallel zueinander geschaltet sind.
Die Ausgangssignale der Frequenzverschiebungsblöcke 5 werden, wie zuvor beschrieben, über die Schaltungskomponenten 7 und 8 oder 6 in den Ausgangsdiplexer 10 eingeführt.

Die Speisung bzw. die Spannungsversorgung der erfindungsgemäßen Vorrichtung kann mittels einer externen Speisequelle 12 oder über Eingangs- oder Ausgangsverbindungselemente 1, 11 erfolgen.

Die Figur 2 zeigt den Begrenzungsbereich des Eingangsfilters 3 eines Ausführungsbeispiels der erfindungsgemäßen Vorrichtung. Wie aus Figur 2 zu entnehmen ist, eliminiert das Eingangsfilter 3 einen Teil des LTE-Signals (LTE DL), während es die Signale, die den Fernsehkanälen entsprechen, z.B. die Kanäle 21, 22, 23, 24,..... 57, 58, 59, 60, passieren lässt. Wie aus Figur 2 weiter zu ersehen ist, ist die Eliminierung des LTE-Signals nicht vollständig, wegen des geringen Frequenzabstandes, der zwischen dem Fernsehkanal 60 und dem ersten LTE-Kanal (nur 1 MHz Schutzband) und wegen der erhöhten Dämpfung, die benötigt würde, um das LTE-Signal in vollständiger Form zu eliminieren.

Die Figur 3 zeigt den Begrenzungsbereich des Eingangsdiplexers 4 der erfindungsgemäßen Vorrichtung zur Unterdrückung störender hochfrequenter Signale. Wie aus Figur 3 gut zu erkennen ist, teilt der Eingangsdiplexer 4 das Signal in zwei Teile, wobei ein Teil aus den Fernsehsignalen 21 bis 59 besteht, und wobei der andere Teil aus dem Kanal 60 und den höheren Frequenzen bzw. Kanälen besteht, wo sich die störenden LTE-Signale befinden.

Figur 4 zeigt das Signal am Ausgang des Ausgangsdiplexors 10 der erfindungsmäßen Vorrichtung zur Unterdrückung störender hochfrequenter Signale. Wie zu erkennen ist, wird am Ausgang dieses Diplexors 10 oder im Ausgangsverbinder 11 dasselbe Eingangssignal erhalten, das aus den Fernsehkanälen 21 bis 60 besteht, nachdem die Störungen, die den Frequenzen oberhalb des Kanals 60 entsprechen, eliminiert worden sind, in diesem Fall die LTE-Signale.

### Bezugszeichenliste

- 1: Eingangsverbinder
- 2: Eingangsdämpfungsglied
- 3: Eingangsfilter
- 4: Eingangsdiplexer
- 5: Block der Frequenzverschiebung
- 51: Erster Frequenzumwandler
- 52: SAW-Filter
- 53: Zweiter Frequenzumwandler
- 54: Schalter
- 6: Durchgangsleitung
- 7: Ausgangsfilter
- 8: Ausgangsverstärker
- 9: Verstärker mit automatischer Gewinnsteuerung
- 10: Ausgangsdiplexer
- 11: Ausgangsverbinder
- 12: Speisequelle
- 21, ..., 60; LTE Am: Eingang 1 anliegendes Fernsehsignal
- LTE: Störende hochfrequente Signale
- DL: Down Link
- UL: Up Link
- n: Anzahl von Fernsehkanälen mit störenden hochfrequenten Signalen = Anzahl erster und zweiter Frequenzumwandler 51, 53

## Patentansprüche

1. Vorrichtung zur Unterdrückung störender hochfrequenter Signale, die insbesondere in Fernsehkanälen enthalten sind,
- wobei die Vorrichtung Mittel aufweist, die aus einem am Eingang anliegenden Signal (21, ..., 60; LTE), das Fernsehkanäle (21, ..., 60) umfasst, störende hochfrequente Signale (LTE) eliminieren, deren Frequenz oberhalb eines vorbestimmten Fernsehkanals (60) liegt,
**dadurch gekennzeichnet,**
- **dass** die Mittel, wenigstens aus einem Eingangsdiplexer (4), einem Ausgangsdiplexer (10), wenigstens aus einem ersten und einem zweitem Frequenzwandler (51, 53) und aus einem SAW-Filter (52) bestehen,
- **dass** der erste und der zweite Frequenzwandler (51, 53) und das SAW-Filter (52) parallel zu einer Verbindung zwischen Eingangsdiplexer (4) und Ausgangsdiplexer (10) geschaltet sind, und
**dass** der erste Frequenzwandler (51), das SAW-Filter (52) und der zweite Frequenzwandler (53) in Reihe geschaltet sind.

2. Vorrichtung nach Anspruch 1, **dadurch gekennzeichnet,**
- **dass** die störenden hochfrequenten Signale (LTE) im Bereich zwischen etwa 790 MHz und 862 MHz liegen.

3. Vorrichtung nach einem der vorstehenden Ansprüche, **dadurch gekennzeichnet,**
- **dass** die Vorrichtung einen Schalter (54) aufweist, der einen Fernsehkanal auswählt, ab welchem störende Signale eliminiert werden.

4. Vorrichtung nach Anspruch 3, **dadurch gekennzeichnet,**
- **dass** der Schalter (54) mit dem wenigstens einen Eingangsdiplexer (4), mit dem wenigstens einen ersten Frequenzwandler (52) und mit dem wenigstens einen zweiten Frequenzwander (53) verbunden ist.

5. Vorrichtung nach einem der vorstehenden Ansprüche, **dadurch gekennzeichnet,**
- **dass** die Mittel, die aus einem am Eingang anliegenden Signal (21, ..., 60; LTE), das Fernsehkanäle (21, ..., 60) umfasst, störende hochfrequente Signale (LTE) eliminieren, deren Frequenz oberhalb eines vorbestimmten Fernsehkanals (60) liegt, eine vorgebbare Anzahl (n) von Fernsehkanälen (60) eliminieren, und
**dass** die Vorrichtung eine gleiche Anzahl (n) erster und zweiter Frequenzumwandler (51, 53) aufweist.

6. Vorrichtung nach einem der Ansprüche 3 bis 5, **dadurch gekennzeichnet,**
- **dass** der Schalter (54) mittels eines Fernbedienungsgebers bedienbar ist.

7. Vorrichtung nach einem der vorstehenden Ansprüche, **dadurch gekennzeichnet,**
- **dass** die Vorrichtung mit einer internen oder externen Speisequelle (12) verbunden ist.

8. Vorrichtung nach Anspruch 7, **dadurch gekennzeichnet,**
- **dass** die externe Speisequelle (12) über einen Ausgangsstecker (11) mit der Vorrichtung verbunden ist.

## Claims

1. Device for suppressing high frequency interference signals that are present in particular in television channels,
- wherein the device comprises means that eliminate high frequency interference signals (LTE) from a signal (21, ..., 60; LTE) that prevails at the input and includes television channels (21, ..., 60), the frequency of said high frequency signals being above a predetermined television channel (60),
**characterised in**
- **that** the means comprise at least one input diplexer (4), one output diplexer (10), at least one first and one second frequency converter (51, 53) and one SAW filter (52),
- **that** the first and the second frequency converter (51, 53) and the SAW filter (52) are connected parallel to a connection between the input diplexer (4) and output diplexer (10), and
- **that** the first frequency converter (51), the SAW filter (52) and the second frequency converter (53) are connected in series.

2. Device according to claim 1, **characterised in**
- **that** the high frequency interference signals (LTE) are in the range between approximately 790 MHz and 862 MHz.

3. Device according to any one of the preceding claims, **characterised in**
- **that** the device comprises a switch (54) that selects a television channel from which interference signals are to be eliminated.

4. Device according to claim 3, **characterised in**
- **that** the switch (54) is connected to the at least one input diplexer (4), to the at least one first frequency converter (51) and to the at least one second frequency converter (53).

5. Device according to any one of the preceding claims, **characterised in**
- **that** the means that eliminate high frequency interference signals (LTE) from a signal (21, ..., 60; LTE) that prevails at the input and includes television channels (21,...,60), said high frequency signals being above a predetermined television channel (60), eliminate a predetermined number (n) of television channels (60), and
- **that** the device comprises an identical number (n) of the first and second frequency converter (51, 53).

6. Device according to any one of the claims 3 to 5, **characterised in**
- **that** the switch (54) may be operated by means of a television remote control unit.

7. Device according to any one of the preceding claims, **characterised in**
- **that** the device is connected to an internal or external power source (12).

8. Device according to claim 7, **characterised in**
- **that** the external power source (12) is connected via an output connector (11) to the device.

## Revendications

1. Dispositif de suppression de signaux parasites haute fréquence, lesquels sont contenus en particulier dans les canaux de télévision,
- dans lequel le dispositif présente des moyens qui éliminent, à partir d'un signal (21, ..., 60 ; LTE) se trouvant à l'entrée et qui comprend des canaux de télévision (21, ..., 60), des signaux parasites haute fréquence (LTE) dont la fréquence se situe au-dessus d'un canal de télévision prédéfini (60),
**caractérisé**
- **en ce que** les moyens se constituent au moins d'un diplexeur d'entrée (4), d'un diplexeur de sortie (10), au moins d'un premier et d'un second convertisseur de fréquence (51, 53) et d'un filtre SAW à ondes acoustiques de surface (52),
- **en ce que** le premier et le second convertisseur de fréquence (51, 53) et le filtre à ondes acoustiques de surface (52) sont montés en parallèle à une liaison entre le diplexeur d'entrée (4) et le diplexeur de sortie (10), et
- **en ce que** le premier convertisseur de fréquence (51), le filtre SAW à ondes acoustiques de surface (52) et le second convertisseur de fréquence (53) sont montés en série.

2. Dispositif selon la revendication 1, **caractérisé**
- **en ce que** les signaux parasites haute fréquence (LTE) se situent dans la plage comprise entre environ 790 MHz et 862 MHz.

3. Dispositif selon une des revendications précédentes, **caractérisé**
- **en ce que** le dispositif présente un commutateur (54) qui sélectionne un canal de télévision à partir duquel des signaux parasites sont éliminés.

4. Dispositif selon la revendication 3, **caractérisé**
- **en ce que** le commutateur (54) est relié à l'au moins un diplexeur d'entrée (4), à l'au moins un premier convertisseur de fréquence (51) et à l'au moins un second convertisseur de fréquence (53).

5. Dispositif selon une des revendications précédentes, **caractérisé**
- **en ce que** les moyens qui éliminent, à partir d'un signal (21, ..., 60 ; LTE) se trouvant à l'entrée, qui comprend des canaux de télévision (21, ..., 60), des signaux parasites haute fréquence (LTE) dont la fréquence se situe au-dessus d'un canal de télévision (60) prédéfini, éliminent un nombre prédéfinissable (n) de canaux de télévision (60), et
- **en ce que** le dispositif présente un nombre identique (n) de premier et second convertisseurs de fréquence (51, 53).

6. Dispositif selon une des revendications 3 à 5, **caractérisé**
- **en ce que** le commutateur (54) peut être manoeuvré à l'aide d'un transmetteur télécommandé.

7. Dispositif selon une des revendications précédentes, **caractérisé**
- **en ce que** le dispositif est relié à une source d'alimentation interne ou externe (12).

8. Dispositif selon la revendication 7, **caractérisé en ce que**
- la source d'alimentation externe (12) est reliée au dispositif par le biais d'un connecteur de sortie (11).
